Europäisches Patentamt

European Patent Office

Office européen des brevets

(19)

(11) Veröffentlichungsnummer: **0 006 448**
B1

(12)

# EUROPÄISCHE PATENTSCHRIFT

(45) Veröffentlichungstag der Patentschrift:
04.08.82

(21) Anmeldenummer: 79101575.3

(22) Anmeldetag: 22.05.79

(51) Int. Cl.³: **G 01 S 5/06**, G 01 C 23/00,
G 01 C 22/00, G 08 G 1/01

(54) Verfahren zur Standortbestimmung von flächengebundenen Landfahrzeugen im Bereich eines Stadtgebietes.

(30) Priorität: 23.06.78 DE 2827715

(43) Veröffentlichungstag der Anmeldung:
09.01.80 Patentblatt 80/1

(45) Bekanntmachung des Hinweises auf die Patenterteilung:
04.08.82 Patentblatt 82/31

(84) Benannte Vertragsstaaten:
AT CH FR GB IT NL

(56) Entgegenhaltungen:
CH-A-563 024
DE-A-2 137 846
DE-B-1 773 508
GB-A-1 157 118
US-A-3 419 865.

(73) Patentinhaber: SIEMENS AKTIENGESELLSCHAFT
Berlin und München, Postfach 22 02 61,
D-8000 München 22 (DE)

(72) Erfinder: Thilo, Peer, Dr., Buchhierlstrasse 19,
D-8000 München 71 (DE)
Erfinder: von Tomkewitsch, Romuald, Dipl.-Ing.,
Winklweg 8, D-8026 Ebenhausen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Standortbestimmung von flächengebundenen Landfahrzeugen im Bereich eines Stadtgebietes

Die Erfindung bezieht sich auf ein Verfahren zur Standortbestimmung von flächengebundenen Landfahrzeugen im Bereich eines Stadtgebietes, bei dem das zu ortende Fahrzeug zu bestimmten Meßzeitpunkten jeweils nach Aufforderung durch eine Zentrale Meßsignale aussendet, welche von mehreren getrennt angeordneten Empfangsstationen empfangen und zur Zentrale weitergeleitet werden, wo die jeweiligen Laufzeitdifferenzen ermittelt und nach einem Hyperbelverfahren zur Gewinnung eines aktuellen Meßpunktes ausgewertet werden.

Derartige Funkortungsverfahren sind seit langem bekannt, beispielsweise zur Ortung von Flugzeugen und Schiffen, wobei die verschiedensten Meßprinzipien Verwendung finden. Neuerdings werden solche Ortungsverfahren auch für Stadtgebiete eingesetzt, um beispielsweise Polizei- oder Notdienstfahrzeuge ständig zu orten und damit deren Einsatzbereitschaft zu erhöhen. Die üblichen Ortungsverfahren können jedoch in Stadtgebieten nicht ohne weiteres verwendet werden, da durch die starken und ständig wechselnden Reflexionen der Funksignale die Ortungsergebnisse verfälscht werden. Erst durch zusätzliche Maßnahmen ist es möglich, einigermaßen zuverlässige Standortbestimmungen für Landfahrzeuge in einem Stadtgebiet zu gewinnen.

So ist beispielsweise ein Hyperbel-Ortungsverfahren bekannt (DE-PS 21 37 846), bei dem ein Meßsignal des jeweiligen Fahrzeugs von mehreren getrennt angeordneten Empfangsstationen empfangen und an eine Zentralstation weitergeleitet wird, wo dann durch Phasenvergleich die Laufzeitdifferenzen ermittelt und zur Standortbestimmung ausgewertet werden. Um das Verfahren im Stadtgebiet praktikabel zu machen, sind dort verschiedene zusätzliche Maßnahmen, wie die Gewinnung von Korrekturwerten über einen Vergleichssender sowie eine Mittelwertbildung aus jeweils mehreren Messungen, vorgesehen. Dieses Hyperbel-Ortungsverfahren hat den Vorteil, daß jede Positionsbestimmung auf einer unabhängigen Absolutmessung beruht, so daß sich keine Fehler addieren können. Allerdings ist dabei nachteilig, daß die Ergebnisse im Rahmen der Ortungsgenauigkeit um die wahren Fahrzeugpositionen streuen. Weitere Nachteile des Hyperbel-Ortungsverfahrens sind die großen Fehler in schlecht über Funk erreichbaren Gebieten einer Stadt, im Bereich sogenannter Funkschatten, und in Vororten, die außerhalb des von den Ortungsempfängern umschlossenen Gebietes liegen.

Daneben ist zur Ortung von Fahrzeugen in einem Stadtgebiet auch bereits ein Koppelnavigationsverfahren bekannt geworden, DE-B-1 773 508. Bei diesem Verfahren werden die in kurzen Zeiteinheiten gefahrenen Wegstrecken nach Betrag und Richtung ermittelt. Kennt man den Ausgangspunkt des Fahrzeugs, so kann man seine Position zu jedem beliebigen Zeitpunkt durch vektorielle Addition der Streckenelemente berechnen. Der Vorteil dieses Verfahrens liegt darin, daß die Ortungsergebnisse wenig streuen, und daß die vektorielle Additon an Bord des Fahrzeuges vorgenommen werden kann, so daß die Ortung auch in Gebieten mit schlechter Funkverbindung weitergeführt werden kann. Zur Abfrage der im Fahrzeug errechneten Ergebnisse reicht eine Funkverbindung zu einer einzigen Empfangsstation aus.

Da es sich beim Koppelnavigationsverfahren um Relativmessungen handelt, muß der Ausgangspunkt des zu ortenden Fahrzeuges genau bekannt sein. Weiterhin ist es nachteilig, daß sich die Meßfehler addieren, da jeder neu ermittelte Streckenvektor an der letzten, fehlerhaft ermittelten Fahrzeugposition ansetzt. Diese Ortungsfehler haben darüberhinaus weitgehend einen systematischen Charakter. Ist zum Beispiel der Rollradius des Fahrzeugrades, von dem die Wegmessung abgeleitet wird, größer als der für die Rechnung angenommene Nennwert, so wird der gemessene Betrag des Streckenvektors stets etwas kleiner sein als die wahre Wegstrecke. Ebenso ist auch die Winkelmessung im allgemeinen mit einem systematischen Fehler behaftet. Alle diese Faktoren führen zu Ortungsfehlern, die etwa proportional mit der zurückgelegten Wegstrecke wachsen.

Aufgabe der Erfindung ist es, ein Ortungsverfahren der eingangs erwähnten Art anzugeben, mit welchem beispielsweise Fahrzeuge in einem Stadtgebiet laufend mit guter Genauigkeit geortet werden können. Die Meßergebnisse sollen dabei möglichst unabhängig von der wechselnden Güte der Funkverbindung zum Fahrzeug sein und auch möglichst wenig streuen; vor allem soll vermieden werden, daß Meßfehler sich addieren und zu immer größeren Abweichungen führen.

Erfindungsgemäß wird diese Aufgabe dadurch gelöst, daß zusätzlich in jedem Fahrzeug zu jedem Meßzeitpunkt der den seit dem letzten Meßzeitpunkt zurückgelegten Fahrtweg nach Betrag und Richtung beschreibende Streckenvektor ermittelt und daß dieser jeweilige Streckenvektor oder ein aus mehreren aufeinanderfolgenden Streckenvektoren gebildeter Summenstreckenvektor zur Zentrale übertragen wird, wo durch Ankopplung der einzelnen aufeinanderfolgenden Streckenvektoren bzw. der Summenstreckenvektoren an eine bekannte Startposition ein jeweils aktueller erster Meßpunkt festgelegt wird, daß ferner aus diesem jeweiligen ersten Meßpunkt und dem zu dem selben Zeitpunkt nach dem Hyperbelverfahren ermittelten jeweiligen zweiten Meßpunkt jeweils ein Fehlervektor nach Betrag und Richtung ermittelt wird, daß aus den aufaddierten Fehlervektoren bei Erreichen eines vorgegebenen Korrekturschwellwertes ein Korrekturvektor ermittelt und zu den Streckenvektoren addiert wird, wobei der hierdurch erreichte korrigierte Meßpunkt als Startposition für die weitere Ankopplung der Streckenvektoren dient.

Durch die erfindungsgemäße Kombination von Relativmessungen nach dem Koppelnavigationsverfahren mit Absolutmessungen nach dem Hyperbel-Ortungsverfahren läßt sich erreichen, daß die Meßergebnisse wenig streuen, und daß die Ortung auch in Gebieten weitergeführt werden kann, die durch Funk schwer erreichbar sind. Durch die bei dieser Kombination vorgenommene Korrektur der Meßergebnisse wird aber gleichzeitig jegliche Verfälschung vermieden, die sich aus der Addition von Meßfehlern ergeben könnte.

Als Startposition für das Meßverfahren und für die Ankopplung der Streckenvektoren kann ein genau bekannter Ort, also beispielsweise ein Fahrzeugdepot, dienen. Da dies jedoch nicht immer möglich ist, dient bei einer zweckmäßigen Ausgestaltung des erfindungsgemäßen Verfahrens jeweils ein durch Hyperbel-Ortung ermittelter Meßpunkt als Startposition. Soweit dieser Meßpunkt fehlerhaft ist, werden die ersten Positionsbestimmungen ebenfalls einen relativ großen Fehler aufweisen, der aber durch die im Verfahren vorgesehene Korrektur bald beseitigt wird, so daß im weiteren Verlauf die Meßpunkte immer mehr an den wahren Fahrzeugweg angenähert werden.

Um die Korrektur bei längerer Durchführung des Ortungsverfahrens immer feinfühliger werden zu lassen, ist in einer Weiterbildung vorgesehen, den Korrekturschwellwert nach jeder durchgeführten Korrektur zu reduzieren. Um jedoch zu Beginn der Ortung die Streuung der Meßergebnisse aus dem Hyperbelverfahren nicht in unerwünschter Weise in Form von Überkompensationen wirksam werden zu lassen, ist es weiterhin zweckmäßig, eine Korrektur für eine bestimmte Anzahl von Messungen bei Beginn der Ortung auszuschließen. Damit wird sichergestellt, daß die Korrektur erst erfolgt, wenn sie sich auf eine im Sinne der Statistik ausreichende Zahl von Hyperbel-Ortungsergebnissen gründet. Diese Sicherheit kann dadurch erhöht werden, daß eine Korrektur erst nach einer vorgegebenen Anzahl glaubwürdiger Hyperbel-Ortungsergebnisse durchgeführt wird. Dabei kann es auch zweckmäßig sein, eine Korrektur nur dann vorzunehmen, wenn bei der Hyperbelortung die Anzahl der glaubwürdigen Ergebnisse um einen vorgegebenen Betrag größer ist als die Anzahl der als unglaubwürdig ermittelten Ergebnisse. Unglaubwürdig sind Meßergebnisse beispielsweise, wenn die Fahrzeugsignale stark verrauscht empfangen wurden; auch Plausilitätskontrollen können herangezogen werden.

Die Parameter des jeweiligen Streckenvektors können im Fahrzeug aufgrund bekannter Meßverfahren über einen Mikroprozessor ermittelt werden. Danach ist es zweckmäßig, diese Parameter digital auf dem Funkwege zur Zentrale zu übertragen; dies geschieht zweckmäßigerweise zu jedem Meßzeitpunkt. In der Zentrale können die Meßergebnisse des Koppelnavigationsverfahrens und des Hyperbelortungsverfahrens in einem Computer gespeichert und zur Gewinnung der Korrekturvektoren verarbeitet werden.

Wie bereits erwähnt, ist die Koppelnavigation mit systematischen Fehlern behaftet. Aus dem Vergleich der Meßergebnisse beider Ortungsverfahren können zusätzlich Korrekturfaktoren zur Eliminierung dieser systematischen Fehler gewonnen werden. Dies geschieht in der Weise, daß der Betrag und die Richtung des Korrekturvektors in Beziehung zu den gemessenen Streckenvektoren gesetzt werden. Der auf den einzelnen Streckenvektor entfallende Anteil der Abweichung nach Betrag und Richtung kann dann als Korrekturfaktor für die weiteren Messungen berücksichtigt werden. Um Regelschwingungen bei dieser Adaption zu vermeiden, ist es allerdings zweckmäßig, die Korrekturfaktoren geringer anzusetzen als die ermittelten Abweichungen, beispielsweise mit dem halben Betrag. Die Korrekturfaktoren können individuell für jedes einzelne Fahrzeug in der Zentrale gespeichert und bei den entsprechenden Messungen indivduell berücksichtigt werden. Man erhält auf diese Weise ein Ortungssystem, das sich auf langsam verändernde systematische Fehler adaptiert. Diese Adaptierung bleibt auch erhalten, wenn die Hyperbelortung für einige Zeit nicht funktioniert, z. B. in Vororten, die außerhalb des Erfassungsbereiches liegen. Aufgrund der vorher bereits erreichten Adaption sind auch in solchen Bereichen genauere Ergebnisse der Koppelnavigation zu erwarten.

Die Erfindung wird nachfolgend an Ausführungsbeispielen anhand der Zeichnung näher erläutert. Es zeigt

Fig. 1 die prinzipielle Arbeitsweise eines bekannten Hyperbelortungsverfahrens,

Fig. 2 die Beziehung zwischen den Meßergebnissen beim Hyperbelortungsverfahren und dem wahren Fahrzeugweg,

Fig. 3 eine Addition von Fehlervektoren bei Hyperbelortungsverfahren,

Fig. 4 die Beziehung zwischen den Meßergebnissen beim Koppelnavigationsverfahren und dem wahren Fahrzeugweg,

Fig. 5 die Beziehung zwischen dem wahren Fahrzeugweg und den nach dem erfindungsgemäßen Ortungsverfahren ermittelten Meßergebnissen,

Fig. 6 bis 9 die Gewinnung der Korrekturwerte in Fig. 5,

Fig. 10 und 11 die Ermittlung von Korrekturfaktoren zur Adaption des Koppelnavigationsverfahrens,

Fig. 12 eine symbolische Darstellung der Korrekturauslösung.

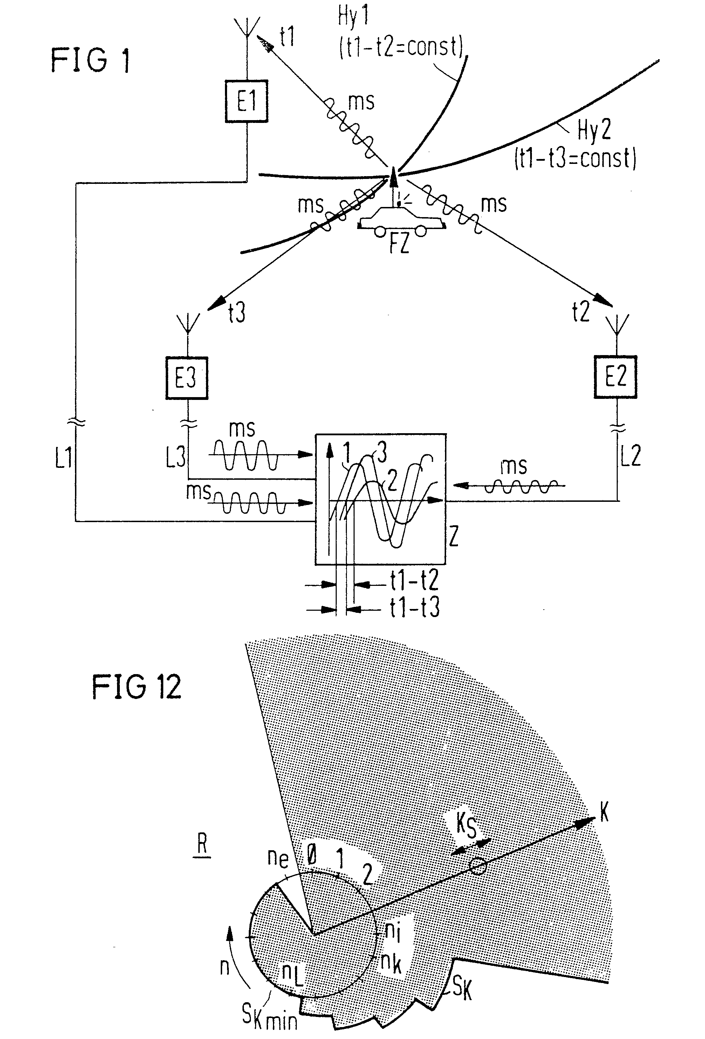

Die Fig. 1 zeigt die prinzipielle Arbeitsweise der bekannten Hyperbelortung. Dabei sendet ein zu ortendes Fahrzeug FZ, beispielsweise nach Aufforderung durch die Zentrale, ein Meßsignal ms aus. Dieses Meßsignal wird ungerichtet ausgestrahlt und von mindestens drei ortsfesten Empfangsstationen E1, E2 und E3 empfangen. Je nach dem Standort des Fahrzeuges benötigt das Meßsignal unterschiedliche Laufzeiten t1, t2 und t3 zu den einzelnen Empfangsstationen und wird dort auch mit entsprechend unterschiedlicher Phasenverschiebung empfangen. Das niederfrequente Meßsignal, auf einem hochfrequenten Träger ausgestrahlt, wird in den Empfangsstationen demoduliert und über feste Leitungen L1, L2 und L3 mit bekannten Laufzeiten an die Zentrale Z weitergeleitet. Dort werden mit Hilfe von Phasenvergleichseinrichtungen die Laufzeitdifferenzen zwischen t1, t2 und t3 ermittelt. Mit Hilfe dieser Differenzwerte lassen sich Hyperbeln zwischen jeweils zwei Empfangsstationen ermitteln, durch deren Schnittpunkt der Standort des Fahrzeuges festgelegt ist. In Fig. 1 beschreibt beispielsweise die Hyperbel Hy1 den geometrischen Ort für die Differenz t1−t2, während die Hyperbel Hy2 den geometrischen Ort für die Differenz t1−t3 bildet. Dieses Verfahren ist bekannt.

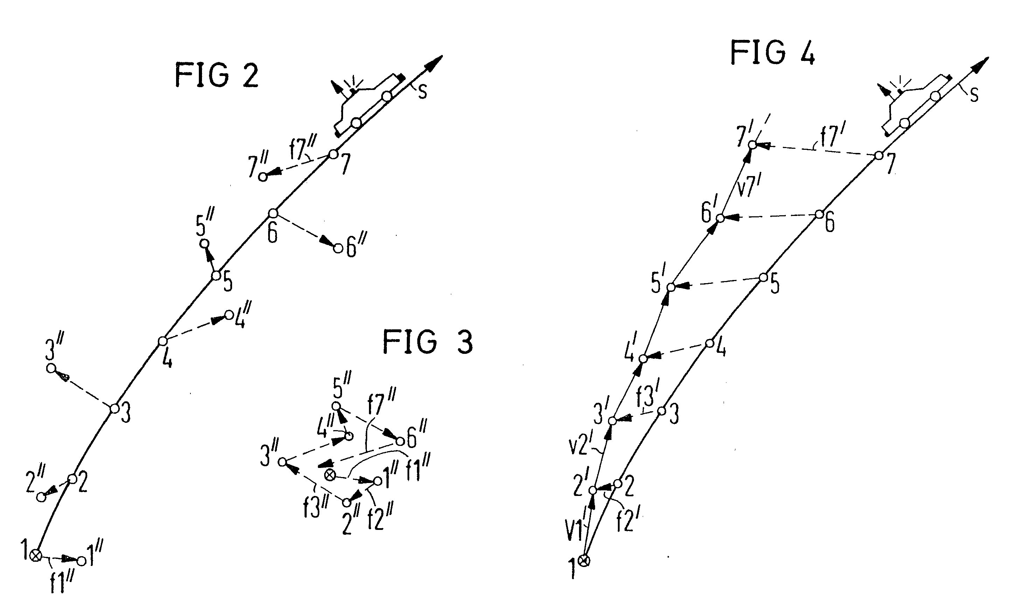

Fig. 2 zeigt, wie die Positionsbestimmungen bei der Hyperbelortung im Vergleich zum wahren Fahrzeugweg streuen. Dieser wahre Fahrzeugweg s ist durch eine ausgezogene Linie dargestellt, welche beim Startpunkt 1 beginnt. Während das Fahrzeug sich entlang des Weges s bewegt, wird zu bestimmten Meßzeitpunkten die Fahrzeugposition geortet. Während das Fahrzeug sich an den Punkten 1, 2 ... 7 befindet, ergibt die Hyperbelortung die jeweils zugehörigen Meßpunkte 1″, 2″, 3″ ... 7″. Diese Meßpunkte streuen um den Weg s. Der Betrag und die Richtung der Meßfehler sind in Fig. 2 durch Fehlervektoren f1″, f2″ ... f7″ angedeutet, die von den wahren Positionen eines Fahrzeuges zu den Ortungszeitpunkten zu den mit Hilfe des Hyperbelortungsverfahrens ermittelten Fahrzeugpositionen führen.

Man kann jedoch davon ausgehen, daß die Beträge und Richtungen der Fehlervektoren statistisch streuen. Denn sie beruhen auf Reflexionen und Beugungen der Funksignale an den Gebäuden, und diese verursachen im allgemeinen keine systematischen Fehler mit irgendeiner Vorzugsrichtung. Sofern diese Voraussetzung zutrifft, muß die Addition einer nach statistischen Gesichtspunkten ausreichenden Zahl von Fehlervektoren immer wieder in die Nähe des Ausgangspunktes zurückzuführen. Eine derartige Addition der Fehlervektoren ist in Fig. 3 gezeigt.

Die Fig. 4 zeigt dagegen, wie sich die Meßergebnisse beim Koppelnavigationsverfahren zum wahren Fahrzeugweg verhalten. Bei der Koppelnavigation werden die in kurzen Zeiteinheiten gefahrenen Wegstrecken (Streckenelemente) nach Betrag und Richtung ermittelt. Kennt man den Ausgangspunkt des Fahrzeuges, so kann man seine Position zu jedem beliebigen Zeitpunkt durch vektorielle Addition der Streckenelemente berechnen. Der Betrag der Streckenelemente wird mit einem Impulsgeber gemessen, der die Radumdrehungen zählt. Zur Ermittlung des Winkels des einzelnen Streckenvektors gibt es verschiedene Möglichkeiten. So ist unter der Firmenbezeichnung »Flair« ein

Verfahren bekannt geworden, bei dem die Fahrtrichtung mit Hilfe einer Magnetsonde ermittelt wird, die den Winkel zwischen dem magnetischen Feld der Erde und der Fahrzeuglängsachse mißt (siehe IEEE Transactions on Vehicular Technology, Feb. 1977, S. 47−60). Man kann die Fahrtrichtung jedoch auch mit einem Kreiselkompaß feststellen, wie es bei Trägheits-Navigationsverfahren allgemein üblich ist.

In Fig. 4 ist der Fahrzeugweg s wie in Fig. 2 als durchgehende Linie dargestellt. Das Fahrzeug besitzt zu den einzelnen Meßzeitpunkten die Positionen 1, 2, 3 ... 7. Ausgehend von dem bekannten Standpunkt 1 werden nun die einzelnen Streckenvektoren v1′, v2′ ... v7′ ermittelt und addiert; das führt zu den Meßpunkten 2′, 3′ ... 7′. Auch hier kann man Fehlervektoren einzeichnen, die die Abweichung des jeweiligen Meßpunktes von der zugehörigen wahren Fahrzeugposition bezeichnen, nämlich die Fehlervektoren f2′, f3′ ... f7′. Bei diesen Fehlervektoren ist zu sehen, daß sie nicht statistisch streuen, sondern weitgehend einen systematischen Charakter haben. Ist z. B. der Rollradius des Fahrzeugrades, von dem die Wegimpulse hergeleitet werden, größer als der für die Rechnung angenommene Nennwert, so wird der gemessene Betrag des Streckenvektors stets etwas kleiner sein als die wahre Wegstrecke. Dies kann beispielsweise durch zu großen Reifendruck hervorgerufen werden. Ebenso ist auch die Winkelmessung im allgemeinen mit einem systematischen Fehler behaftet. Alle diese Faktoren führen zu Ortungsfehlern, die immer in derselben Richtung wirken und etwas proportional mit der zurückgelegten Wegstrecke wachsen.

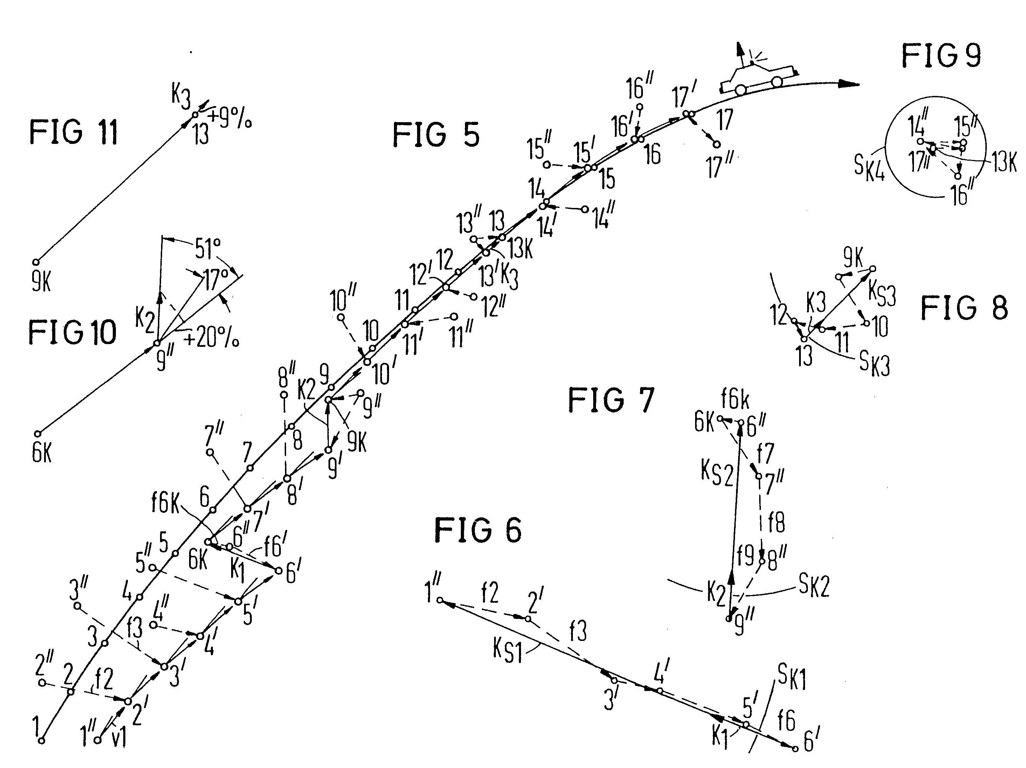

Die Fig. 5 zeigt die Ortungsergebnisse bei der erfindungsgemäßen Kombination der Koppelnavigation mit der Hyperbelortung. Der wahre Fahrzeugweg ist wiederum mit der durchgezogene Linie s bezeichnet und die einzelnen Fahrzeugpositionen zu den Meßzeitpunkten sind mit 1, 2, 3 ... 17 nummeriert. Zu jedem Meßzeitpunkt wird sowohl ein Meßpunkt nach dem Hyperbelortungsverfahren, bezeichnet mit 1″, 2″ usw., als auch ein Meßpunkt nach dem Koppelnavigationsverfahren, bezeichnet mit 2′, 3′ usw. ermittelt. Wird ein Fahrzeug nach einer längeren Betriebspause erstmals wieder eingesetzt, so liefert die Hyperbelortung beim ersten Ortungsaufruf den Meßpunkt 1″. Mit diesem ersten Ortungsaufruf wird auch die Errechnung des ersten Streckenvektors im Bordcomputer des Fahrzeuges FZ gestartet. Auch für die Koppelnavigation gilt in diesem Fall der Meßpunkt 1″ als Startpunkt. Beim zweiten Ortungsaufruf sendet das Fahrzeug Betrag und Richtung des Streckenvektors v1 zur Zentrale. Der zentrale Ortungsrechner fügt diesen Streckenvektor an die von ihm zuvor abgespeicherten Koordinaten des Startpunkts 1″ der Hyperbelortung an, die somit zum Ausgangspunkt für die Koppelnavigation wird. Der zentrale Ortungsrechner ermittelt anschließend den Meßpunkt 2′ mit Hilfe der Hyperbelortung und errechnet sich den Fehlervektor f2. Beim nächsten Ortungsaufruf erfolgt sinngemäß dasselbe zur Ermittlung der Meßpunkte 3′ und 3″ sowie des Fehlervektors f3. Diese Prozedur der parallel ausgeführten Ortungen nach beiden Verfahren wird in gleicher Weise fortgesetzt.

Der zentrale Ortungsrechner nimmt schritthaltend auch eine vektorielle Addition der Fehlervektoren f2, f3 usw. vor, bis ein Schwellwert $S_{K1}$ für eine erste Korrektur überschritten wird. Wie aus Fig. 6 ersichtlich ist, weisen die Fehlervektoren zunächst eine eindeutige Tendenz in einer Richtung auf, da die Koppelnavigationswerte infolge ihres fehlerbehafteten Startpunktes gegenüber dem wahren Fahrzeugweg s versetzt sind. Die Ortungsergebnisse der Hyperbelortung hingegen streuen statistisch um den wahren Fahrzeugweg s, wie oben begründet. Der erste Korrekturschwellwert $S_{K1}$ wird daher im allgemeinen recht schnell erreicht. In Fig. 6 ist angenommen, daß er nach der sechsten Ortung überschritten wird.

Durch die vektorielle Addition der Fehlervektoren errechnet der zentrale Ortungsrechner den Korrekturvektor K1, mit dem der Ausgangspunkt für die weitere Koppelnavigation korrigiert wird. K1 ergibt sich gemäß Fig. 6 aus den Fehlervektoren f2 bis f6. Sein Betrag ist ein Fünftel des summierten Fehlervektors $K_{S1}$, weil fünf Fehlervektoren zur Überschreitung der ersten Korrekturschwelle führten. Seine Richtung ist um 180° gegenüber dem summierten Fehlervektor $K_{S1}$ gedreht. Dieser Korrekturvektor K1 wird in Fig. 5 an den Meßpunkt 6′ angesetzt; Ausgangspunkt für die folgenden Koppelnavigationsschritte ist damit der korrigierte Meßpunkt 6K.

Nach einer ersten Korrektur wird die erreichbare Ortungsgenauigkeit im allgemeinen noch nicht erzielt worden sein. Deshalb werden weitere Korrekturen folgen. Um diese Korrekturen bei besserer Übereinstimmung der Ergebnisse der Hyperbelortung und der Koppelnavigation feinfühliger werden zu lassen, wird die Korrekturschwelle entsprechend reduziert. Bei der in Fig. 7 dargestellten Ermittlung des zweiten Korrekturvektors K2 ist sie gegenüber der ersten Schwelle auf die Hälfte reduziert, also $S_{K2} = 1/2 . S_{K1}$. Dementsprechend wird sie bei dem angenommenen Beispiel bereits durch die Addition von vier Fehlervektoren f6, f7, f8, f9 überschritten. Der Korrekturvektor K2 hat also einen Betrag von einem Viertel des summierten Fehlervektors $K_{S2}$ und führt vom Meßpunkt 9′ der Koppelnavigation zum neuen Ausgangspunkt 9K.

Im angenommenen Beispiel wird die Korrekturschwelle nochmals halbiert, was zur dritten Korrektur gemäß Fig. 8 mit dem Korrekturvektor K3 führt. Die Korrekturfeinfühligkeit kann natürlich nur bis zu einer sinnvollen Grenze gesteigert werden, damit Regelschwingungen vermieden werden. Eine vierte Korrektur (Fig. 9) findet im dargestellten Beispiel nicht mehr statt, weil die Korrekturschwelle $S_{K4}$ nicht mehr überschritten wird. Der zentrale Ortungsrechner gibt jeweils die wenig streuenden Ergebnisse der korrigierten Koppelnavigation als ermittelte Fahrzeugpositionen aus.

Wie erwähnt, ist die Koppelnavigation mit systematischen Fehlern behaftet. So geht in die Messung des Betrages der Streckenvektoren der wirksame Rollradius des den Tachometer antreibenden Fahrzeugrades ein. Dieser Rollradius ist von der Reifenabnutzung, vom Luftdruck in den Reifen und auch von der Zuladung abhängig. Ebenso kann eine systematische Mißweisung der Magnetsonde von ihrer genauen Ausrichtung zur Fahrzeugachse oder von Eisenteilen in ihrer unmittelbaren Nähe herrühren. Der Vergleich der Ergebnisse beider Ortungsverfahren bietet auch die Möglichkeit, diese systematischen Fehler zu eliminieren. Addiert man die Korrekturvektoren nach erfolgter Anfangskorrektur, also im eingeschwungenen Zustand über einige Zeit und bringt man den Summenkorrekturvektor in Relation zu dem vom Fahrzeug zurückgelegten Fahrweg, so kann der zentrale Ortungsrechner berechnen, ob die Ergebnisse der Koppelnavigation denen der Hyperbelnavigation davoneilen oder gegenüber jenen zurückbleiben. Dementsprechend kann er bei der Errechnung der Streckenvektoren einen Korrekturfaktor individuell für jedes Fahrzeug einsetzen, der die Reifenabnutzung und andere Einflußfaktoren kompensiert.

Auch systematische Mißweisungen der Magnetsonde lassen sich durch Winkel-Korrekturverfahren bei der Berechnung der Streckenvektoren kompensieren. In der Fig. 10 wird ein derartiger Adaptionsvorgang veranschaulicht. Der Korrekturvektor K2 hat sich auf der Fahrstrecke von den Ortungspunkten 6 bis 9 ergeben. Dabei kann sich die Adaption natürlich nur auf die bekannten Ergebnisse der Koppelnavigation stützen, also auf die Strecke 6K bis 9′ in Fig. 5; diese Strecke ist in Fig. 10 nochmals verschoben dargestellt. Zu dieser Strecke wird der Korrekturvektor K2 in Beziehung gebracht. Diese zweite Korrektur gemäß Fig. 5 hat im vorliegenden Beispiel zur Folge, daß der Betrag der gefahrenen Strecke um 20% vergrößert und die Richtung um −17° je Streckenvektor verändert wurde. Um Regelschwingungen auch bei der Adaption zu vermeiden, werden die Korrekturfaktoren für die Koppelnavigation im dargestellten Beispiel nur halb so groß angesetzt, also für den Betrag +10% und für die Richtung −8,5°. Man erkennt in Fig. 5, daß sich die Meßergebnisse von den Meßpunkten 10′ bis 13′ nun kaum noch von den entsprechenden wahren Fahrzeugpositionen 10 bis 13 entfernen. Ohne Adaption wäre das bei den Meßergebnissen 7', 8' und 9' in viel höherem Maße der Fall.

In Fig. 11 wird noch eine zweite Adaption mit dem Fehlervektor K3 dargestellt. Sie führt nur noch zu einem Korrekturfaktor von +4,5% für den Betrag des Streckenvektors. Dies ergibt sich daraus, daß K3 eine Vergrößerung des Betrages um 9% erbrachte; die Hälfte davon wird als Korrekturfaktor genommen. Die Winkelmessung durch die Magnetsonde ist in diesem Beispiel bereits durch die erste Adaption von ihrem systematischen Fehler befreit worden. Man erkennt deutlich, daß die ausgegebenen Ergebnisse der Koppelnavigation nicht die Sprünge derjenigen der Hyperbelortung vollführen und sich doch der wahren Fahrstrecke s des zu ortenden Fahrzeuges gut annähern.

Zur Verfeinerung der Adaption kann es außerdem von Vorteil sein, anstelle eines einzigen Korrekturvektors mehrere hintereinander ermittelte Korrekturvektoren zu summieren und mit den entsprechenden Streckenvektoren in Beziehung zu setzen. Ein solcher Summen-Korrekturvektor könnte bereits mit einer Adaption eine gute Kompensierung der systematischen Fehler bewirken.

Anhand der Fig. 12 soll nunmehr noch das Verfahren der Korrekturauslösung beschrieben werden. Diesem Verfahren kommt eine große Bedeutung zu, weil es dafür verantwortlich ist, daß Korrekturen und Adaptionen nicht nur bei der Inbetriebnahme eines zu ortenden Fahrzeuges nach einer längeren Pause sinnvoll funktionieren. In Fig. 12 ist ein n-teiliger Ringzähler in Form einer Uhr dargestellt. Der Zeiger K dieser Uhr zeigt die jeweilige Stellung des Ringzählers R an. Bei jeder vertrauenswürdigen Hyperbelortung (d. h. mit einer genügenden Anzahl unverrauscht empfangener Signale) wird der Ringzähler, ausgehend von der Nullstellung, um eine Teilung im Uhrzeigersinn weitergeschaltet. Bei jeder unzuverlässig erscheinenden Hyperbelortung wird der Ringzähler um einen Schritt zurückgeschaltet. Er kann jedoch nur bis zur Stellung Null zurückgesetzt werden.

Auf dem Zeiger K denke man sich den Betrag $K_S$ des jeweils aktuellen Korrekturvektors, d. h. der Summe der Fehlervektoren seit der letzten Korrektur, markiert. Eine Korrektur und damit verbunden auch eine Adaption wird ausgelöst, sobald die Marke $K_S$ auf dem Zeiger K den Korrekturschwellwert $S_K$ übersteigt, also den punktierten Bereich verläßt.

Im Falle einer Korrektur springt der Zeiger K sofort in die Nullstellung zurück.

Anstelle des in Fig. 12 dargestellten Ringzählers, mit dem die vertrauenswürdigen Messungen gezählt werden und der bei jeder nicht vertrauenswürdigen Messung um einen Schritt zurückgestellt wird, kann natürlich auch eine andere Einrichtung, beispielsweise eine programmgesteuerte Rechenanlage verwendet werden. In einer solchen Anlage ist es auch möglich, die einzelnen Streckenvektoren nach Betrag und Richtung zu addieren, jeweils den aktuellen Korrekturvektor zu ermitteln und zu speichern und mit dem ebenfalls gespeicherten Korrekturschwellenwert zu vergleichen.

Wie bereits erwähnt, wird eine Korrektur erst ausgelöst, wenn die Marke $K_S$ den punktierten Bereich in Fig. 12 verläßt, also den Schwellwert oder Korrekturgrenzwert übersteigt. Dabei ist im Bereich von Null bis $n_i$ Messungen überhaupt kein Schwellwert angesetzt, eine Korrektur ist also in diesem Bereich nicht vorgesehen. Erst von dem Schritt $n_k$ an tritt der Schwellwert $S_K$ in Erscheinung und er verringert sich von da an schrittweise. Diesem symbolisch dargestellten Verfahren liegt die folgende Überlegung zugrunde:

Eine Korrektur sollte nur erfolgen, wenn sie sich auf eine im Sinne der Statistik ausreichende Zahl von Hyperbelortungsergebnisse gründet. Im Interesse einer möglichen zutreffenden Korrektur sollte diese Zahl groß sein. Andererseits sollte aber eine Korrektur auch möglichst frühzeitig nach einem Ereignis erfolgen, das die Koppelnavigation zu falschen Ergebnissen bringt. Im Interesse einer möglichst schnellen Korrektur sollte daher die Zahl der erforderlichen Hyperbelortungen möglichst klein sein. Bei dem in Fig. 12 symbolisch dargestellten Verfahren wird ein Kompromiß zwischen diesen beiden Bestrebungen gewählt.

Grundsätzlich wird für eine Korrektur eine Zahl an glaubhaften Hyperbelortungen gefordert, die größer ist als $n_i$. Jede unglaubhafte Ortung stellt den Ringzähler um einen Schritt zurück. Eine Korrektur der Koppelnavigationen kann also nur dann erfolgen, wenn in einer Folge von Hyperbelortungen die Zahl der glaubhaften Ergebnisse um $n_i$ größer ist als die der unglaubhaften. Mit dieser Vorschrift wird erreicht, daß Korrekturen in funktechnisch ungünstigen Gebieten und in Gebieten außerhalb des Antennenfeldes erschwert werden oder völlig unterbleiben.

Erst vom Ringzählerstand $n \geq n_K$ kann eine Korrektur ausgelöst werden. Allerdings liegt die Schwelle $S_K$, die der Korrekturvektor übersteigen muß, noch relativ hoch. Mit der hohen Schwelle soll erschwert werden, daß eine Korrektur nach einer Folge von $n_i$ zutreffenden Hyperbelortungen durch einen einzelnen Ausreißer ausgelöst wird. Solche singulären, unzutreffenden Messungen können als Folge lokal begrenzter ungünstiger Reflexionsverhältnisse vorkommen.

Mit jedem weiteren Ringzählerschritt in positiver Richtung wird die Korrekturschwelle $S_K$ weiter reduziert. Liegen auch tatsächlich systematische Abweichungen der Ortungsergebnisse bei einem der beiden Verfahren vor, so verschiebt sich auch die Marke KS infolge der Addition gleichsinnig gerichteter Fehlervektoren mit jedem weiteren Schritt nach außen. Aus diesen beiden Gründen wird die Korrekturauslösung nach jeder weiteren glaubwürdigen Hyperbelortung erleichtert. Hat die Korrekturschwelle $S_K$ den Wert $S_{Kmin}$ erreicht, das ist mit dem Zählerschritt $n_L$, so wird dieser Schwellwert beibehalten, um Überschwingungen der Regelung zu vermeiden. Beim letzten Schritt $n_e$ des Ringzählers wird die Korrekturschwelle $S_K$ auf Null gesetzt. In dieser Stellung wird eine Korrektur erzwungen, auch wenn der Korrekturvektor $K_S$ sehr klein geblieben ist, um die Vektoradditionen in den Fahrzeuggeräten und dem zentralen Ortungsrechner neu beginnen zu können.

Steht ein zur Ortung aufgerufenes Fahrzeug, was mit Hilfe des Fahrimpulsgebers leicht feststellbar ist und im Antworttelegramm dem zentralen Ortungssender mitgeteilt wird, so bleibt die Ortung unberücksichtigt. In einem solchen Falle wird kein Fehlervektor addiert und der Ringzähler verbleibt in seiner letzten Position.

**Patentansprüche**

1. Verfahren zur Standortbestimmung von flächengebundenen Landfahrzeugen im Bereich eines Stadtgebietes, bei dem das zu ortende Fahrzeug (FZ) zu bestimmten Meßzeitpunkten (1, 2 ... 17) jeweils nach Aufforderung durch eine Zentrale (Z) Meßsignale (ms) aussendet, welche von mehreren getrennt angeordneten Empfangsstationen (E1, E2, E3) empfangen und zur Zentrale (Z) weitergeleitet werden, wo die jeweiligen Laufzeitdifferenzen ermittelt und nach einem Hyperbelverfahren zur Gewinnung eines aktuellen Meßpunktes (1", 2" usw.) ausgewertet werden, dadurch gekennzeichnet, daß zusätzlich in jedem Fahrzeug (FZ) zu jedem Meßzeitpunkt (1, 2, ... 17) der den seit dem letzten Meßzeitpunkt zurückgelegten Fahrtweg (s) nach Betrag und Richtung beschreibende Streckenvektor (v1, v2 usw.) ermittelt und daß dieser jeweilige Streckenvektor oder ein aus mehreren aufeinanderfolgenden Streckenvektoren gebildeter Summenstreckenvektor zur Zentrale (Z) übertragen wird, wo durch Ankopplung der aufeinanderfolgenden Streckenvektoren bzw. der Summenstreckenvektoren an eine bekannte Startposition (1") ein jeweils aktueller erster Meßpunkt (2', 3' usw.) festgelegt wird, daß ferner aus diesem jeweiligen ersten Meßpunkt (2') und dem zu dem selben Zeitpunkt nach dem Hyperbelverfahren ermittelten jeweiligen zweiten Meßpunkt (2") jeweils ein Fehlervektor (f2, f3 usw.) nach Betrag und Richtung ermittelt wird, daß aus den aufaddierten Fehlervektoren bei Erreichen eines vorgegebenen Korrekturschwellwertes ($S_K$) ein Korrekturvektor (K1, K2, K3) ermittelt und zu den Streckenvektoren addiert wird, wobei der hierdurch erreichte korrigierte Meßpunkt (6K, 9K, 13K) als Startposition für die weitere Ankopplung der Streckenvektoren dient.

2. Verfahren nach Anspruch 1, dadurch gekennzeichnet, daß als Startposition für die Ankopplung der Streckenvektoren eine durch die Hyperbelortung ermittelte Fahrzeugposition (1") verwendet wird.

3. Verfahren nach Anspruch 1 oder 2, dadurch gekennzeichnet, daß der Betrag der Streckenvektoren in bekannter Weise mit einem die Radumdrehungen zählenden Impulsgeber ermittelt wird.

4. Verfahren nach einem der Ansprüche 1 bis 3, dadurch gekennzeichnet, daß die Richtung der einzelnen Streckenvektoren in bekannter Weise mit Hilfe einer den Winkel zwischen dem magnetischen Feld der Erde und der Fahrzeuglängsachse messenden Magnetsonde ermittelt wird.

5. Verfahren nach einem der Ansprüche 1 bis 3, dadurch gekennzeichnet, daß die Richtung der einzelnen Streckenvektoren mit einem Kreiselkompaß gemessen wird.

6. Verfahren nach einem der Ansprüche 1 bis 5, dadurch gekennzeichnet, daß die Parameter des jeweiligen Streckenvektors im Fahrzeug durch einen Mikroprozessor berechnet werden.

7. Verfahren nach einem der Ansprüche 1 bis 6, dadurch gekennzeichnet, daß die Parameter des jeweiligen Streckenvektors vom einzelnen Fahrzeug digital zur Zentrale übertragen werden.

8. Verfahren nach einem der Ansprüche 1 bis 7, dadurch gekennzeichnet, daß der Korrekturschwellwert nach jeder durchgeführten Korrektur verkleinert wird.

9. Verfahren nach einem der Ansprüche 1 bis 8, dadurch gekennzeichnet, daß eine Korrektur durch Addition eines Korrekturvektors erst vorgenommen wird, wenn eine vorgegebene Anzahl glaubwürdiger Hyperbelortungsmessungen ermittelt wurde.

10. Verfahren nach Anspruch 9, dadurch gekennzeichnet, daß eine Zähleinrichtung durch jede glaubwürdige Hyperbelortungsmessung um einen Schritt vorgestellt und durch jede unglaubwürdige Hyperbelortungsmessung um einen Schritt zurückgestellt wird, und daß eine Korrektur erst dann durchgeführt wird, wenn der Korrekturschwellwert nach Erreichen eines vorgegebenen Zählerstandes überschritten wird.

11. Verfahren nach Anspruch 10, dadurch gekennzeichnet, daß der Korrekturschwellwert nach Erreichen des vorgegebenen Zählerstandes mit jedem weiteren Zählerschritt vermindert wird.

12. Verfahren nach Anspruch 1, dadurch gekennzeichnet, daß der Korrekturschwellwert mit Erreichen des letzten Zählerschrittes der Zähleinrichtung auf Null gesetzt wird.

13. Verfahren nach einem der Ansprüche 1 bis 12, dadurch gekennzeichnet, daß systematische Fehler der Vektormessung durch Bildung von Korrekturfaktoren aus dem Vergleich der Korrekturvektoren mit den zugehörigen Streckenvektoren eliminiert werden.

14. Verfahren nach Anspruch 13, dadurch gekennzeichnet, daß die Korrekturfaktoren für jedes einzelne Fahrzeug in der Zentrale gespeichert werden.

## Claims

1. A method for determining the location of surfacebound land vehicles in the region of an urban area, wherein the vehicle (FZ) to be located emits measurement signals (ms) at specific measurement times (1, 2 ... 17) as requested by a central control (Z), which measurement signals are received by a plurality of separate receiving stations (E1, E2, E3) and are forwarded to the central control (Z) where the transit time differences are determined and are analysed in accordance with a hyperbolic process in order to obtain an up-to-date measurement point (1', 2' etc.), characterised in that additionally at every measurement time (1, 2, ... 17) each vehicle (FZ) determines the distance vector (v1, v2 etc.) which describes the distance (s) covered since the last measurement time in respect of quantity and direction, and that this distance vector or a sum distance vector formed from a plurality of consecutive distance vectors is transmitted to the central control (Z) where, as a result of the coupling of the consecutive distance vectors or the sum distance vectors to a known start position (1'), an up-to-date first measurement point (2', 3' etc.) is determined, and moreover that on the basis of this first measurement point (2') and the second measurement point (2'') determined at the same time in accordance with the hyperbolic process, a fault vector (f2, f3 etc.) is determined in respect of quantity and direction, and if a predetermined correction threshold value ($S_K$) is reached a correction vector (K1, K2, K3) is determined from the added fault vectors and is itself added to the distance vectors, the corrected measurement point (6K, 9K, 13K) achieved in this way serving as a start position for the further coupling of the distance vectors.

2. A method as claimed in claim 1, characterised in that a vehicle position (1'') determined by hyperbolic location is used as a start position for the coupling of the distance vectors.

3. A method as claimed in claim 1 or 2, characterised in that the amount of the distance vectors is determined in known manner by a pulse generator which counts the wheel revolutions.

4. A method as claimed in one of the claims 1 to 3, characterised in that the direction of the individual distance vectors is determined in known manner with the aid of a magnetic probe which measures the angle between the magnetic field of the earth and the longitudinal axis of the vehicle.

5. A method as claimed in one of the claims 1 to 3, characterised in that the direction of the individual distance vectors is measured by a gyrocompass.

6. A method as claimed in one of the claims 1 to 5, characterised in that the parameters of the particular distance vector are calculated in the vehicle by a micro-processor.

7. A method as claimed in one of the claims 1 to 6, characterised in that the parameters of the particular distance vector are transferred in digital form from the individual vehicle to the central control.

8. A method as claimed in one of the claims 1 to 7, characterised in that the correction threshold value is reduced following the implementation of each correction.

9. A method as claimed in one of the claims 1 to 8, characterised in that a correction comprising addition of a correction vector is not effected until a predetermined number of authentic hyperbolic location measurements has been determined.

10. A method as claimed in claim 9, characterised in that a counting device is advanced by one step by every authentic hyperbolic location measurement and is reset by one step by every non-authentic hyperbolic location measurement, and that a correction is not effected until the correction threshold value is exceeded following the reaching of a predetermined count.

11. A method as claimed in claim 10, characterised in that following the reaching of the predetermined count the correction threshold value is reduced with every further counting step.

12. A method as claimed in claim 1, characterised in that on the reaching of the last counting step of the counting device the correction threshold value is set at zero.

13. A method as claimed in one of the claims 1 to 12, characterised in that systematic faults in the vector measurement are eliminated by the formation of correction factors on the basis of a comparison of the correction vectors with the associated distance vectors.

14. A method as claimed in claim 13, characterised in that the correction factors for each individual vehicle are stored in the central control.

## Revendications

1. Procédé pour déterminer le site de véhicules roulants sur le sol dans une zone urbaine, dans lequel le véhicule (FZ) à localiser émet, sur la demande émanant d'un central (Z) et à des instants de mesure déterminés, des signaux de mesure (ms) qui sont reçus par plusieurs postes récepteurs (E1, E2, E3) disposés en des emplacements distincts et qui sont retransmis au central (Z) où les différences des temps de propagation respectives sont déterminées et évaluées selon un procédé hyperbolique pour obtenir un point de mesure actuel (1'', 2'', etc), caractérisé par le fait que dans chaque véhicule (FZ) on détermine, en plus, pour chaque point de mesure (1, 2 ... 17), la valeur et la direction représentatives du vecteur course (v1, v2 etc) du chemin parcouru (s) depuis le dernier point de mesure, et que ce vecteur course ou un vecteur somme formé par plusieurs vecteurs course successifs est transmis au central (Z) où on détermine, par couplage des vecteurs course ou des sommes de vecteurs course à une position de départ connue (1″), un premier point de mesure actuel (2′, 3′ etc), et qu'ensuite on détermine, à partir de ce premier point de mesure (2′) et du second point de mesure (2″) déterminé à ce même instant par le procédé hyperbolique, la valeur et la direction d'un vecteur erreur (f2, f3 etc), qu'à partir des vecteurs erreur additionnés on détermine, lorsqu'est atteinte une valeur de seuil de correction prédéterminée ($S_K$), un vecteur correction (K1, K2, K3) qui est additionné aux vecteurs course, le point de mesure corrigé (6K, 9K, 13K) ainsi obtenu servant de position de départ pour d'autres couplages des vecteurs course.

2. Procédé selon la revendication 1, caractérisé par le fait que l'on utilise comme position de départ pour le couplage des vecteurs course, une position de véhicule (1″) déterminée par localisation hyperbolique.

3. Procédé selon revendication 1 ou 2, caractérisé par le fait que la valeur des vecteurs course est déterminée, de manière connue, avec un générateur d'impulsions qui compte les rotations des roues.

4. Procédé selon l'une des revendications 1 à 3, caractérisé par le fait que la direction des différents vecteurs course est déterminée, de manière connue, à l'aide d'une sonde magnétique qui mesure l'angle entre le champ magnétique terrestre et l'axe longitudinal du véhicule.

5. Procédé selon l'une des revendications 1 à 3, caractérisé par le fait que la direction des différents vecteurs course est mesurée avec un compase hygroscopique.

6. Procédé selon l'une des revendications 1 à 5, caractérisé par le fait que les paramètres du vecteur course sont calculés dans le véhicule au moyen d'un microprocesseur.

7. Procédé selon l'une des revendications 1 à 6, caractérisé par le fait que les paramètres du vecteur course sont transmis sous forme numérique au central à partir des différents véhicules.

8. Procédé selon l'une des revendications 1 à 7, caractérisé par le fait que la valeur de seuil de correction est diminuée après chaque correction effectuée.

9. Procédé selon l'une des revendications 1 à 8, caractérisé par le fait qu'une correction par addition d'un vecteur de correction n'est effectuée que si un nombre prédéterminé de mesures de localisation hyperbolique plausible sont été déterminées.

10. Procédé selon la revendication 9, caractérisé par le fait qu'un dispositif de comptage est avancé d'un pas par chaque mesure de localisation hyperbolique plausible alors qu'il est ramené d'un pas en arrière pour chaque mesure de localisation hyperbolique qui n'est pas plausible, et qu'une correction n'est réalisée que si la valeur de seuil de correction est dépassée après que soit atteint un état de comptage prédéterminé.

11. Procédé selon la revendication 10, caractérisé par le fait qu'après que soit atteint un état de comptage prédéterminé, la valeur de seuil de correction est diminuée avec chaque autre pas de comptage.

12. Procédé selon la revendication 1, caractérisé par le fait que la valeur de seuil de correction est ramenée à zéro lorsqu'est atteint le dernier pas de comptage du dispositif de comptage.

13. Procédé selon l'une des revendications 1 à 12, caractérisé par le fait que les erreurs systématiques de la mesure des vecteurs sont éliminées par formation de facteurs de correction à partir de la comparaison des vecteurs de correction avec les vecteurs course associés.

14. Procédé selon la revendication 13, caractérisé par le fait que les facteurs de correction pour chaque véhicule individuel sont mémorisés dans le central.

FIG 1

E1

t1

Hy 1
(t1−t2=const)

ms

Hy 2
(t1−t3=const)

ms

ms

FZ

t3

t2

E3

E2

ms

1 3
2

ms

L1

L3

ms

Z

ms

L2

t1−t2
t1−t3

FIG 12

R

K S

K

ne Ø 1 2

ni
nk

n

nL

SK

SK min

FIG 2

FIG 3

FIG 4

0 006 448

FIG 9

FIG 11

FIG 5

FIG 10

FIG 8

FIG 7

FIG 6

0 006 448